Europäisches Patentamt

European Patent Office

Office européen des brevets

(11) Veröffentlichungsnummer: **0 312 640**

**A1**

## (12) EUROPÄISCHE PATENTANMELDUNG

(21) Anmeldenummer: 87115577.6

(22) Anmeldetag: 23.10.87

(51) Int. Cl.⁴: **A47J 37/08**

(43) Veröffentlichungstag der Anmeldung:
26.04.89 Patentblatt 89/17

(84) Benannte Vertragsstaaten:
AT BE CH DE ES FR GB GR IT LI LU NL SE

(71) Anmelder: STEINEL Entwicklungs-GmbH für
Elektrotechnik und Elektronik
Tannenweg 10
D-4840 Rheda-Wiedenbrück(DE)

(72) Erfinder: Schulze-Fröhlich, Dieter F., Dr.
Niggenkamp 17
D-4836 Herzebrock(DE)
Erfinder: Leder, Dietmar
Nordfeld 4
D-3257 Springe 2(DE)

(74) Vertreter: Patentanwälte Grünecker,
Kinkeldey, Stockmair & Partner
Maximilianstrasse 58
D-8000 München 22(DE)

(54) Zentriervorrichtung für einen Brotröster.

(57) Es wird eine Zentriereinrichtung für einen Brotröster angegeben, bestehend aus einer Federanordnung (7, 7'; 10), die eine an Zentrierelementen (1)
der Zentriereinrichtung im oberen Endbereich derselben befestigte erste Feder (7; 7') und eine die
Mitte der ersten Feder mit dem Ende eines auf- und
abbeweglichen Brotträgers verbindende Zugfeder
(10) aufweist. Die erste Feder (7;7') ist derart ausgebildet, daß sie im im wesentlichen entspannten Zustand die Zentrierelemente (1) auseinanderspreizt,
beim Zentrieren jedoch mit Zug auf die Zentrierelemente (1) einwirkt. Es kann je eine solche Federanordnung (7,7';10) an beiden Enden der Zentrierelemente (1) und des Brotträgers angebracht sein.

FIG. 3

(a)          (b)          (c)

EP 0 312 640 A1

## Zentriervorrichtung für einen Brotröster

Die Erfindung bezieht sich auf eine Zentriervorrichtung für einen Brotröster mit einem vertikal angeordneten Brotaufnahmefach, zwei zu beiden Seiten des Brotaufnahmefachs angeordneten, flächenhaft wirkenden elektrischen Heizvorrichtungen und einem zwischen den Heizvorrichtungen in dem Brotaufnahmefach auf- und abbeweglichen, rinnenartigen Brotträger, der unter der Wirkung einer ihn in eine obere Endstellung vorspannenden Federeinrichtung steht und von einer Halteeinrichtung in einer abgesenkten Stellung festhaltbar ist, mit zwei das Brotaufnahmefach zu beiden Seiten begrenzenden stab- oder gitterartigen Zentrierelementen, die im Bereich ihrer unteren Enden jeweils um längs des Brotaufnahmefachs verlaufende Achsen schwenkbar gelagert sind und unter dem Einfluß von Spanneinrichtungen stehen, die in der abgesenkten Stellung des Brotträgers die oberen Enden der Zentrierelemente einander annähern, und mit Einrichtungen zum Auseinanderspreizen der Zentrierelemente in der oberen Endstellung des Brotträgers.

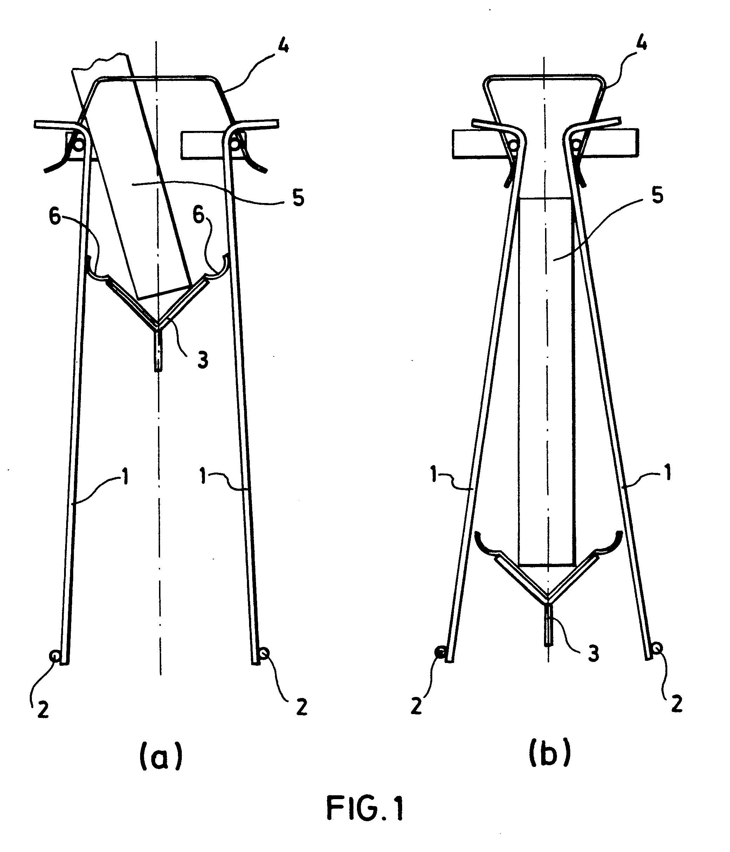

Eine solche Zentriereinrichtung ist bekannt und beispielsweise in Fig. 1 in zwei verschiedenen Stellungen des Brotträgers dargestellt. Die Elemente des Brotrösters sind dabei aus Übersichtlichkeitsgründen nicht dargestellt, da sie zur Erläuterung der Zentriervorrichtung nicht notwendig sind. Insbesondere ist auch die Federeinrichtung, die den Brotträger in die obere Endstellung vorspannt, nicht dargestellt.

In Fig. 1 ist mit der Zeichnung (a) die Zentriereinrichtung in der oberen Endstellung des Brotträgers dargestellt, während in (b) der Brotträger in seiner abgesenkten Stellung dargestellt ist. Man erkennt in stirnseitiger Ansicht in Fig. 1 jeweils zwei Zentrierelemente 1, die um längs eines zwischen ihnen liegenden Brotaufnahmefachs (ohne Bezugszeichen) verlaufende Achsen 2 im Bereich ihrer unteren Enden im Brotröster schwenkbar gelagert sind, den in dem Brotaufnahmefach auf- und abbeweglichen Brotträger 3, der rinnenartig ausgeführt ist, um seinerseits eine Zentrierfunktion ausüben zu können, sowie eine Spanneinrichtung in Form eines Federbügels 4, der auf den oberen Endbereich der Zentrierelemente 1 im Sinne einer gegenseitigen Annäherung derselben einwirkt. Schematisch dargestellt ist weiterhin eine Brotscheibe 5, die auf den Brotträger 3 aufgesetzt ist.

Der Brotträger 3 ist mit seitlich vorstehenden Spreizarmen 6 versehen, die bei der vertikalen Bewegung des Brotträgers 3 an den Zentrierelementen 1 entlanggleiten.

In der angehobenen Stellung des Brotträgers 3, die in Fig. 1(a) dargestellt ist, halten die an dem Brotträger angebrachten Spreizarme 6 die Zentrierelemente 1 in einem auseinandergespreizten Zustand, in dem das Einsetzen und Entnehmen der Brotscheibe 5 in bzw. aus dem Brotaufnahmefach des Brotrösters leicht möglich ist. Wenn der Brotträger 3 in seine abgesenkte Stellung gebracht wird, die in Fig. 1(b) dargestellt ist, beispielsweise mittels eines aus dem Brotröster herausragenden Hebels (nicht dargestellt), wie üblicherweise bei Brotröstern dieser Art vorhanden, werden die Zentrierelemente 1 von der Spannfeder 4 einander angenähert, so daß sie die Brotscheibe 5 in dem Brotaufnahmefach zentrieren, damit diese zu den flächenhaft wirkenden elektrischen Heizvorrichtungen (nicht dargestellt) beiderseits des Aufnahmefachs gleiche Abstände aufweist, um ein gleichmäßiges beidseitiges Toasten zu gewährleisten.

Nachteilig an dieser Konstruktion ist, daß die Spreizarme 6 als gesonderte Teile hergestellt oder an dem Brotträger angebracht werden müssen, was zusätzliche Werkzeug- und Montagekosten erfordert. Außerdem berühren die Spreizarme 6 notwendigerweise die Zentrierelemente 1, sie schleifen an ihnen bei der Betätigung des Brotträgers 3, wodurch störende Geräusche auftreten, Abrieb verursacht wird und schließlich die Funktion des Brotrösters mechanisch gestört werden kann.

Der Erfindung liegt die Aufgabe zugrunde, eine Zentriereinrichtung der eingangs genannten Art anzugeben, die einfacher aufgebaut ist, geringere Montagekosten verursacht und betriebssicher, insbesondere ohne Verursachung störender Geräusche arbeitet.

Diese Aufgabe wird durch die kennzeichnenden Merkmale des Anspruchs 1 gelöst. Vorteilhafte Ausgestaltungen der Erfindung sind Gegenstand der Unteransprüche.

Gemäß der Erfindung ist eine Federanordnung vorgesehen, die die Spanneinrichtungen und die Spreizeinrichtungen des bekannten Brotrösters in sich vereinigt. Diese Federanordnung besteht aus einer an den Zentrierelementen im oberen Endbereich derselben befestigten ersten Feder neben einem der beiden Enden des Brotaufnahmefachs und einer die Mitte der ersten Feder mit dem Ende des Brotträgers verbindenden Zugfeder, wobei die erste Feder derart ausgebildet ist, daß sie im im wesentlichen entspannten Zustand die Zentrierelemente auseinanderspreizt, beim Zentrieren einer Brotscheibe jedoch mit Zug auf die Zentrierelemente einwirkt. Eine solche Federanordnung kann ggf. auch am anderen Ende des Brotaufnahmefachs vorhanden sein, so daß an beiden Enden der Zentrierelemente Zentrierkräfte aufgebracht werden können.

Die Zugfedern haben die Aufgabe, den vergleichsweise großen Weg, den der Brotträger zwischen seiner oberen Endstellung und seiner abgesenkten Stellung beschreibt, an den vergleichsweise kleinen Weg, um den die ersten Federn zur Ausführung ihrer Funktion bewegt werden müssen, anzupassen.

Die Erfindung wird nachfolgend unter Bezugnahme auf die Zeichnungen an zwei Ausführungsbeispielen näher erläutert. Es zeigt:

Fig. 1 die beschriebene Zentriereinrichtung nach dem Stand der Technik;

Fig. 2 eine erste Ausführungsform der Erfindung in angehobenem (a) und abgesenktem (b) Zustand des Brotträgers;

Fig. 3 eine zweite Ausführungsform der Erfindung in angehobenem (a) und abgesenktem Zustand bei Aufnahme einer dünnen Brotscheibe (b) und im abgesenkten Zustand bei Aufnahme einer dicken Brotscheibe (c), und

Fig. 4 die erste Feder bei der Ausführungsform nach Fig. 3 im völlig entspannten Zustand (a), in dem Zustand, den sie nach Einbau in den Brotröster einnimmt (b) und in Darstellung von oben (c).

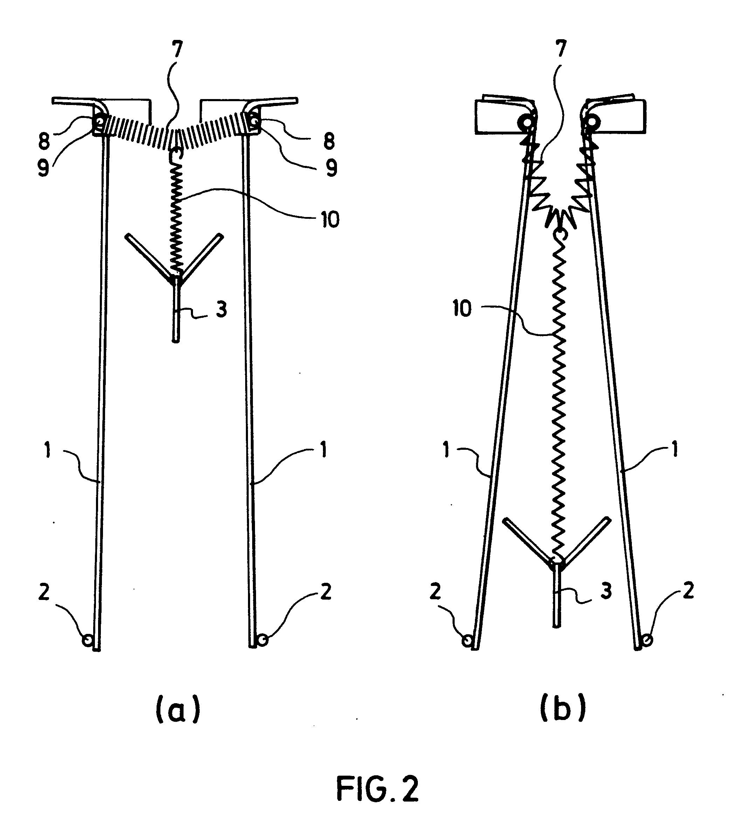

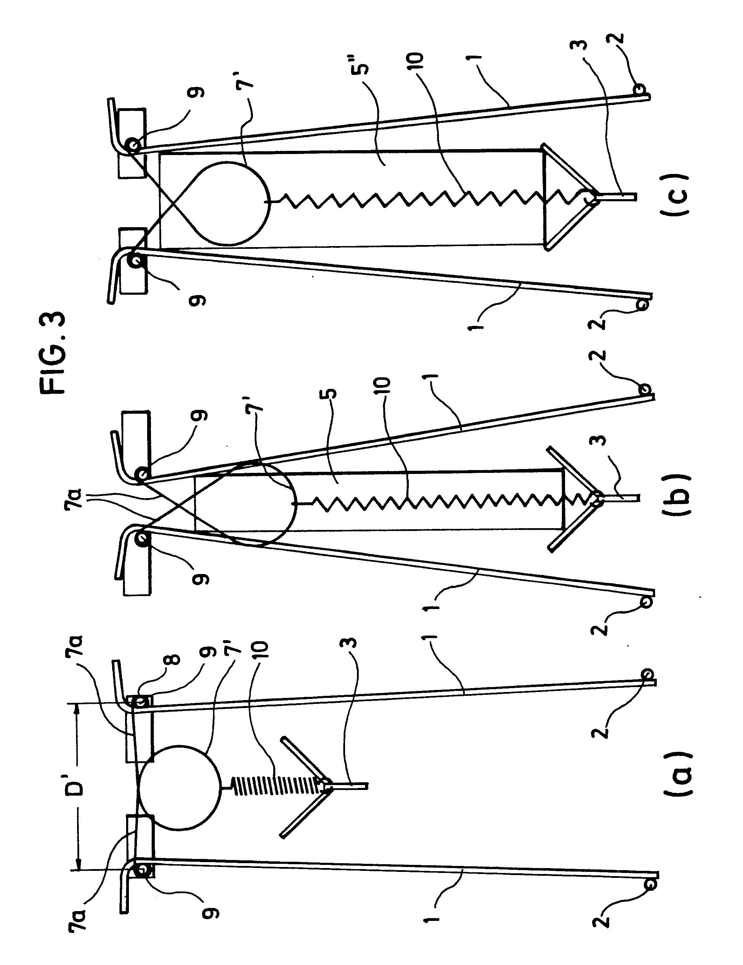

In den Fig. 2 und 3 sind die den Einzelteilen nach Fig. 1 entsprechenden Teile mit übereinstimmenden Bezugszeichen versehen, weshalb auf deren nochmalige Erläuterung hier verzichtet werden kann.

Man erkennt in Fig. 2(a), daß zwischen den oberen Enden der Zentrierelemente 1 eine Schraubenfeder 7 angeordnet ist, deren Länge so bemessen ist, daß sie im entspannten oder annähernd entspannten Zustand die oberen Enden der beiden Zentrierelemente 1 auseinanderspreizt, d.h. ihren Abstand vergrößert, um das Einführen einer Brotscheibe auf den Brotträger 3 zu ermöglichen. Die beiden Enden der Schraubenfeder 7 sind als Ösen 8 ausgebildet, die um Stifte oder Stäbe 9 geschlungen sind, die im oberen Endbereich der Zentrierelemente 1 fest mit diesen verbunden sind. Die Zentrierelemente 1 können jeweils aus einem Gitter, aus vertikalen Stäben oder dergleichen bestehen, um die von den Heizvorrichtungen entwickelte Wärme, insbesondere auch Strahlungswärme, möglichst ungehindert zur Brotscheibe durchzulassen.

In der Mitte ist an der Schraubenfeder 7 eine ebenfalls als Schraubenfeder ausgebildete Zugfeder 10 mit ihrem einen Ende befestigt, die an ihrem anderen Ende mit dem Brotträger 3 verbunden ist. Es sei erwähnt, daß zwei solcher Federanordnungen vorgesehen sind, und zwar an jedem Ende des Brotaufnahmefachs eine solche Federanordnung, so daß die Zentrierelemente 1 an beiden seitlichen Enden von einer Federanordnung beaufschlagt werden.

Fig. 2(b) zeigt die Anordnung nach Fig. 2(a) in abgesenktem Zustand des Brotträgers 3. Man erkennt, daß durch die Abwärtsbewegung des Brotträgers 3 die Zugfeder 10 gespannt worden ist und aufgrund ihrer Verbindung mit der ersten Schraubenfeder 7 ist auch diese gespannt worden, so daß deren Enden Kraftkomponenten an den oberen Enden der Zentrierelemente 1 hervorrufen, die aufeinander zugerichtet sind und somit die oberen Enden der Zentrierelemente 1 einander annähern. Dieser einander angenäherte Zustand der Zentrierelemente 1 ist in Fig. 2(b) dargestellt. In diesem Zustand wirkt die erste Schraubenfeder 7 als Zugfeder.

Eine alternative Lösung, die fertigungstechnisch einfacher zu verwirklichen ist, weil die Verbindung der ersten Feder mit der Zugfeder leichter hergestellt werden kann, ist in Fig. 3 dargestellt. Man erkennt in Fig. 3(a) eine zu einer Schleife gebogene Feder 7' mit tangential verlängerten, im wesentlichen geradlinigen Armen 7a, die sich überkreuzen und an ihren Enden zu Ösen 8 gebogen sind und mit diesen an den oberen Enden der Zentrierelemente 1 an dort vorhandenen Stiften 9 befestigt sind.

In der Mitte der Schleife der Feder 7' gegenüber der Überkreuzungsstelle der Arme 7a ist die Zugfeder 10 angehängt, die mit ihrem anderen Ende mit dem Brotträger 3 verbunden ist.

Wenn der Brotträger 3 aus der in Fig. 3(a) dargestellten Stellung nach unten in die in Fig. 3(b) dargestellte Stellung bewegt wird, spannt sich die Zugfeder 10 und spannt ihrerseits die Schleifenfeder 7', die sich dadurch in gewissem Maße aufbiegt. Ihre Arme 7a wirken Zugkräfte auf die Stifte 9 an den Zentrierelementen 1 aus, die Kraftkomponenten hervorrufen, die die Zentrierelemente 1 wie beim Ausführungsbeispiel nach Fig. 2 einander annähern.

Fig. 3(b) zeigt dabei einen Zustand, wie er sich einstellt, wenn eine dünne Brotscheibe 5 aufgegeben wird, während Fig. 3(c) einen Zustand zeigt, wenn eine relativ dicke Brotscheibe 5'' aufgegeben worden ist. Die Zentrierelemente 1 können, wie sich aus den Fig. 3(b) und 3(c) entnehmen läßt, an die jeweilige Dicke der Brotscheibe in ihrer Stellung angepaßt werden, so daß innerhalb vorgegebener Grenzen Brotscheiben beliebiger Dicke von der Zentriereinrichtung zentriert werden können.

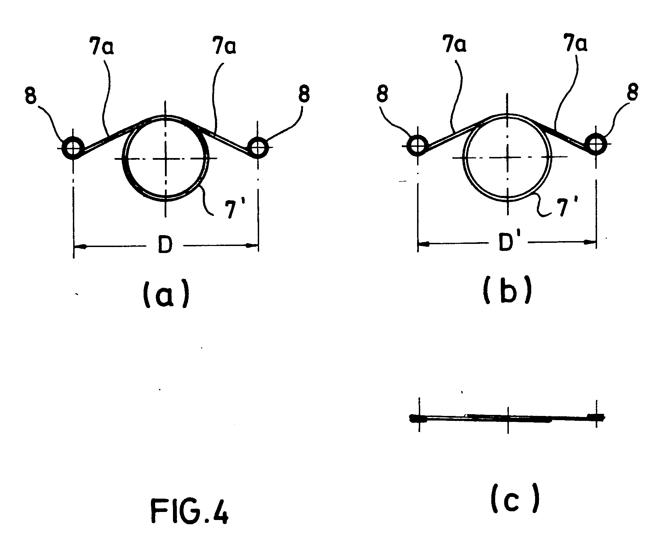

Wie Fig. 4(a) zeigt, hat die schlingenförmige Feder 7' im entspannten Zustand eine Gestalt, in der die an die eigentliche Schlinge anschließenden Arme 7a, die tangential in den von der Schlinge gebildeten Kreisbogen übergehen, eine Gesamtausdehnung D durch die Zentren ihrer Ösen definieren, die etwas kleiner ist als der Abstand D', der gemäß Fig. 3(a) zwischen den Zentren der Stifte 9 definiert ist, wenn sich die Zentrierelemente in ihrer weitesten gegenseitigen Distanz befinden. Auf diese Weise wird sichergestellt, daß die Feder 7' in dem in Fig. 3(a) dargestellten Zustand noch eine Druckkraft auf die Stifte 9 ausübt, die ausreichend ist, die Zentrierelemente 1 in den in Fig. 3(a) dargestellten, geöffneten Zustand zu bringen.

Im eingebauten Zustand nimmt die Feder 7' zunächst die in Fig. 4(b) dargestellte Gestalt an, in der die Federarme 7a etwas durchgebogen sind. Durch das Anhängen der Zugfeder 10 wird schließlich die in Fig. 3(a) ersichtliche Gestalt der Feder 7' erreicht.

Fig. 4(c) läßt die Gestalt der Feder 7' aus einer anderen Blickrichtung klar erkennen.

Wie aus der Beschreibung und den Zeichnungen ersichtlich ist, lassen sich gemäß der Erfindung die Zentrierelemente 1 in einfacher Weise durch die aus den Federn 7 bzw. 7' und 10 bestehende Federanordnung bewegen, wobei die Feder 7 bzw. 7' als Druckfeder wirkt, die die beiden Zentrierelemente 1 voneinander entfernt, wenn eine Brotscheibe in den Brotröster eingeführt oder daraus entnommen werden soll. Irgendwelche schleifende Berührungen sind nicht vorhanden. Federn der genannten Art lassen sich unschwierig herstellen, ohne daß komplizierte Werkzeuge erforderlich sind. Ebenso lassen sich diese Federn leicht an den Elementen des Brotrösters bzw. seiner Zentriereinrichtung anhängen.

Typischerweise hat die Feder 7' bei der Ausführungsform nach Fig. 3 einen Innendurchmesser der Schlinge von 19 mm, einen Innendurchmesser der Ösen von etwa 2,4 mm und besteht aus Federstahldraht einer Dicke von 0,5 mm. Die Zugfeder 10 ist eine Schraubenfeder mit einem Außendurchmesser von 4 mm, einer Länge von Ösenmitte zu Ösenmitte von 27,5 mm und besteht aus Federstahldraht eines Durchmessers von 0,4 mm. Ihre Federkonstante ist so gewählt, daß sie mit einer Kraft von etwa 1,3 N um 35 mm ausgezogen werden kann.

Es sei erwähnt, daß die in den Zeichnungen dargestellten und in der Beschreibung erwähnten Achsen 2 nicht unbedingt als körperliche Achsen, etwa Achswellen oder Achsstifte zu verstehen sind, sondern ganz allgemein als Schwenkpunkte verstanden werden sollen, um die die unteren Enden der Zentrierelemente 1 schwenken. Es ist beispielsweise denkbar, die Zentrierelemente in diesem Bereich zu kröpfen, so daß sie selbst Achsen bilden, oder in anderer Weise schwenkbar zu lagern.

## Ansprüche

1. Zentriervorrichtung für einen Brotröster mit einem vertikal angeordneten Brotaufnahmefach, zwei zu beiden Seiten des Brotaufnahmefachs angeordneten, flächenhaft wirkenden elektrischen Heizvorrichtungen und einem zwischen den Heizvorrichtungen in dem Brotaufnahmefach auf- und abbeweglichen, rinnenartigen Brotträger (3), der unter der Wirkung einer ihn in eine obere Endstellung vorspannenden Federeinrichtung steht und von einer Halteeinrichtung in einer abgesenkten Stellung festhaltbar ist, mit zwei das Aufnahmefach zu beiden Seiten begrenzenden stab- oder gitterartigen Zentrierelementen (1), die im Bereich ihrer unteren Enden jeweils um längs des Aufnahmefachs verlaufende Achsen (2) schwenkbar gelagert sind und unter dem Einfluß von Spanneinrichtungen (7, 7', 10) stehen, die in der abgesenkten Stellung des Brotträgers (3) die oberen Enden der Zentrierelemente (1) einander annähern, und mit Einrichtungen (7, 7') zum Auseinanderspreizen der Zentrierelemente (1) in der oberen Endstellung des Brotträgers (3), **dadurch gekennzeichnet**, daß die Spanneinrichtungen und die Spreizeinrichtungen durch eine Federanordnung (7, 7', 10) gebildet sind, die eine an den Zentrierelementen (1) im oberen Endbereich derselben befestigte erste Feder (7; 7') neben wenigstens dem einen Ende des Brotaufnahmefachs und eine zugehörige, die Mitte der ersten Feder (7; 7') mit dem Ende des Brotträgers (3) verbindende Zugfeder (10) aufweist, wobei die erste Feder (7; 7') derart ausgebildet ist, daß sie im im wesentlichen entspannten Zustand die Zentrierelemente (1) auseinanderspreizt, beim Zentrieren jedoch mit Zug auf die Zentrierelemente (1) einwirkt.

2. Zentriervorrichtung nach Anspruch 1, **dadurch gekennzeichnet**, daß die erste Feder eine Schraubenfeder (7) ist.

3. Zentriervorrichtung nach Anspruch 1, **dadurch gekennzeichnet**, daß die erste Feder (7') eine Schleife aus Federdraht ist, die im entspannten Zustand etwa kreisförmigen oder -ähnlichen Umriß hat, mit tangential verlängerten, im wesentlichen geradlinigen Armen (7a), die sich überkreuzen und an ihren Enden mit den Zentrierelementen (1) verbunden sind.

4. Zentriervorrichtung nach Anspruch 1 oder 2, **dadurch gekennzeichnet**, daß die erste Feder (7; 7') an ihren Enden jeweils mit geschlossenen Ösen (8) versehen ist, die an den Zentrierelementen (1) gelenkig angebracht sind.

5. Zentriervorrichtung nach einem der vorhergehenden Ansprüche, **dadurch gekennzeichnet**, daß neben beiden Enden des Brotaufnahmefachs je eine Federanordnung (7, 7'; 10) angeordnet ist.

FIG.1

FIG. 2

FIG.3

(a)    (b)    (c)

EP 0 312 640 A1

EP 39 29

7a    7a
8    8
7'
D
(a)

7a    7a
8    8
7'
D'
(b)

(c)

FIG.4

Europäisches
Patentamt

**EUROPÄISCHER RECHERCHENBERICHT**

Nummer der Anmeldung

EP 87 11 5577

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 371 174 (SEB) <br> * Ansprüche; Figuren * <br> --- | 1-5 | A 47 J 37/08 |
| A | US-A-2 849 946 (PALMER) <br> * Figuren 3,4 * <br> --- | 1 | |
| A | DE-A-3 045 598 (BOSCH-SIEMENS) <br> * Ansprüche; Figur * <br> --- | 1 | |
| A | GB-A-2 133 281 (PHILIPS) <br> * Insgesamt * <br> --- | 1 | |
| A | FR-A-2 270 828 (SEB) <br> * Figuren; Ansprüche * <br> --- | 1 | |
| A | US-A-3 358 584 (SUTTON) <br> * Figuren 11-12 * <br> ----- | 1 | |

RECHERCHIERTE SACHGEBIETE (Int. Cl.4)

A 47 J

Der vorliegende Recherchenbericht wurde für alle Patentansprüche erstellt

| Recherchenort | Abschlußdatum der Recherche | Prüfer |
|---|---|---|
| DEN HAAG | 23-06-1988 | GAIC P.M.Z. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)